# EUROPÄISCHE PATENTANMELDUNG

(11) **EP 4 671 734 A1**
(43) Veröffentlichungstag der Anmeldung: **31.12.2025**
(21) Anmeldenummer: 24184741.7
(22) Anmeldetag: 26.06.2024
(51) Int. Cl.: G01N 21/17

(54) **SYSTEM UND VERFAHREN ZUM BESTIMMEN EINES MASSES FÜR EINE ABSORPTION EINER PROBE**

(71) Anmelder: Fraunhofer-Gesellschaft zur Förderung der angewandten Forschung e.V., 80686 München (DE); Albert-Ludwigs-Universität Freiburg, 79098 Freiburg (DE)
(72) Erfinder: Strahl, Thomas, 79110 Freiburg (DE); Steinebrunner, Jonas, 79110 Freiburg (DE); Herbst, Johannes, 79100 Freiburg (DE); Rademacher, Sven, 79110 Freiburg (DE); Maier, Eric, 79110 Freiburg (DE)
(74) Vertreter: WSL Patentanwälte Partnerschaft mbB

(57) **Zusammenfassung**

Die vorliegende Erfindung betrifft ein System zum Bestimmen eines Maßes für eine Absorption einer Probe. Ein solches System weist eine Anregungsstrahlungsquelle, einen Probenhalter, eine Detektionseinrichtung und eine Auswerteeinrichtung auf. Die Anregungsstrahlungsquelle erzeugt in einem Betrieb des Systems elektromagnetische Anregungsstrahlung mit einer Anregungswellenlänge und abstrahlt sie ab. Zudem moduliert sie in dem Betrieb des Systems die Anregungswellenlänge innerhalb eines spektralen Abstimmbereichs periodisch. An dem Probenhalter ist eine Probe aufnehmbar und in dem Betrieb des Systems beleuchtet die Anregungsstrahlung die an dem Probenhalter aufgenommene Probe. Die Detektionseinrichtung detektiert eine durch die Absorption der Anregungsstrahlung in der Probe erzeugte periodische Erwärmung und Abkühlung, erzeugt ein die periodische Erwärmung und Abkühlung repräsentierendes Detektionssignal und gibt dieses aus. Die Auswerteeinrichtung ist derart wirksam mit der Detektionseinrichtung verbunden, dass die Auswerteeinrichtung in dem Betrieb des Systems das Detektionssignal von der Detektionseinrichtung erhält, wobei die Auswerteeinrichtung derart eingerichtet ist, dass sie in dem Betrieb des Systems aus dem Detektionssignal das Maß für die Absorption der Probe bestimmt. Erfindungsgemäß weist das System zusätzlich zu dem Probenhalter eine Filtergaszelle auf. Die Filtergaszelle ist in einem Strahlengang der Anregungsstrahlung zwischen der Anregungsstrahlungsquelle und dem Probenhalter angeordnet. In der Filtergaszelle ist ein Filtergas mit einem spektralen Absorptionsbereich aufgenommen, wobei sich der spektrale Absorptionsbereich und der spektrale Abstimmbereich der Anregungsstrahlungsquelle derart überlappen, dass das Modulieren der Anregungswellenlänge zu einer Intensitätsmodulation der Anregungsstrahlung in einer Strahlrichtung hinter der Filtergaszelle führt.

## Beschreibung

Die vorliegende Erfindung betrifft ein System zum Bestimmen eines Maßes für eine Absorption einer Probe. Dazu weist das System eine Anregungsstrahlungsquelle, einen Probenhalter, eine Detektionseinrichtung und eine Auswerteeinrichtung auf. Die Anregungsstrahlungsquelle ist derart ausgestaltet, dass sie in einem Betrieb des Systems elektromagnetische Anregungsstrahlung mit einer Anregungswellenlänge erzeugt und abstrahlt und sie in dem Betrieb des Systems die Anregungswellenlänge innerhalb eines spektralen Abstimmbereichs periodisch moduliert. Der Probenhalter ist derart ausgestaltet und angeordnet, dass an dem Probenhalter eine Probe aufnehmbar ist und dass in dem Betrieb des Systems die Anregungsstrahlung die an dem Probenhalter aufgenommene Probe beleuchtet. Die Detektionseinrichtung ist derart ausgestaltet und angeordnet, dass sie in dem Betrieb des Systems eine durch die Absorption der Anregungsstrahlung in der Probe erzeugte periodische Erwärmung und Abkühlung detektiert und ein die periodische Erwärmung und Abkühlung repräsentierendes Detektionssignal erzeugt und ausgibt. Die Auswerteeinrichtung ist derart wirksam mit der Detektionseinrichtung verbunden, dass die Auswerteeinrichtung in dem Betrieb des Systems das Detektionssignal von der Detektionseinrichtung erhält, wobei die Auswerteeinrichtung derart eingerichtet ist, dass sie in dem Betrieb des Systems aus dem Detektionssignal das Maß für die Absorption der Probe bestimmt.

Die vorliegende Erfindung betrifft zudem ein Verfahren zum Bestimmen eines Maßes für eine Absorption einer Probe, wobei das Verfahren die Schritte umfasst:
Erzeugen und Abstrahlen elektromagnetischer Anregungsstrahlung mit einer Anregungswellenlänge,
periodisches Modulieren der Anregungswellenlänge innerhalb eines spektralen Abstimmbereichs,
Beleuchten der Probe mit der Anregungsstrahlung,
Detektieren einer durch die Absorption der Anregungsstrahlung in der Probe erzeugten periodischen Erwärmung und Abkühlung und
Bestimmen des Maßes für die Absorption aus der periodischen Erwärmung und Abkühlung.

Aus dem Stand der Technik sind Systeme und Verfahren zum Bestimmen der Absorption einer Probe bekannt, welche sich photoakustischen und photothermischen Methoden bedienen. Diese werden auch als photoakustische Spektroskopie (PAS) und photothermische Spektroskopie (PTS) bezeichnet.

Sowohl die photoakustische als auch die photothermische Spektroskopie werden in der Regel zum Charakterisieren von gasförmigen Proben eingesetzt. Allerdings ist es auch möglich, Flüssigkeiten oder Festkörper, insbesondere nicht linear optische Kristalle, zu charakterisieren.

Bei beiden Verfahren wird die Probe, insbesondere die Moleküle in einer gasförmigen Probe, mit periodisch modulierter elektromagnetischer Anregungsstrahlung angeregt, um ein von der Absorption der Probe abhängiges photoakustisches oder photothermisches Signal zu generieren. Dabei macht man sich zunutze, dass die Absorption der Anregungsstrahlung in der Probe immer mit einer lokalen Erwärmung der Probe einhergeht. Ändert man die Intensität der eingestrahlten Anregungsstrahlung periodisch, so ändert sich die Temperatur der Probe lokal ebenfalls periodisch. Eine solche periodische Änderung der Temperatur wiederum geht einher mit einer lokalen periodischen Dichte- und/oder Druckänderung der Probe. Die periodische Druckänderung ist als Schallsignal messbar. Die periodische Dichteänderung ist als periodische Änderung des Brechungsindex der Probe messbar.

Bei der photoakustischen Spektroskopie erfasst man die sich in der Probe ausbreitende Schallwelle mit einem Schalldetektor. Bei der photothermischen Spektroskopie erfasst man die Änderung des Brechungsindex. Dazu betrachtet man beispielsweise, wie sich die Transmission einer elektromagnetische Abfragestrahlung, die ebenfalls den Bereich der Probe beleuchtet, in dem die Anregungsstrahlung absorbiert wird, durch die Brechungsindexänderung ändert.

Das mit beiden Methoden erzeugte Signal ändert sich mit der Konzentration der Probe, welche die Anregungsstrahlung absorbiert. Daher ist die Intensität der erfassten Schallwelle oder die Amplitude der modulierten Brechungsindexänderung ein Maß für die Konzentration des Zielgases.

Da die Probe häufiger gasförmig ist, wird im folgenden Text zumeist beispielhaft die Probe als eine solche gasförmige Probe oder ein Zielgas betrachtet. Die Überlegungen gelten jedoch in analoger Weise auch für flüssige oder feste Proben.

Beiden Methoden ist gemein, dass sie maßgeblich auf einer periodischen Modulation der Anregungsstrahlung beruhen. Für beide Methoden ist es möglich, die Anregungsstrahlung einer Intensitätsmodulation oder einer Wellenlängenmodulation zu unterziehen.

So ist es aus dem Stand der Technik bekannt, die Intensität der Anregungsstrahlungsquelle zu modulieren. Dazu stehen im Stand der Technik mechanische Chopper, akusto-optische Modulatoren, elektrooptische Modulatoren aber auch direkt modulierte Strahlungsquellen, beispielsweise Leuchtdioden oder Halbleiterlaser, zur Verfügung.

Zur Wellenlängenmodulation, d.h. einem Verschieben der Anregungswellenlänge gegenüber der Absorptionslinie der Probe, stehen ebenfalls eine Reihe von Ansätzen aus dem Stand der Technik zur Verfügung. Beispielsweise kann einem abstimmbaren Halbleiterlaser durch eine Strommodulation oder durch eine Temperaturmodulation auch eine Wellenlängenmodulation aufgeprägt werden.

Laser als Anregungsstrahlungsquellen haben sich als vorteilhaft erwiesen, da sie aufgrund der spektralen Schmalbandigkeit ihrer Emission eine hohe Selektivität aufweisen, so dass nur die Zielsubstanz selbst angeregt wird und nicht auch andere Komponenten in der Probe oder im Probenhalter.

Die Intensitätsmodulation von Lasern, insbesondere von Halbleiterlasern, ist andererseits nach wie vor aufwendig. Insbesondere die Intensitätsmodulation durch eine Modulation des Treiberstroms geht in Halbleiterlasern häufig mit nicht verwertbaren Untergrundsignalen einher. Zudem wird für die Robustheit der Messung zumeist auch noch eine Wellenlängenreferenz über eine rein optische Detektion benötigt.

Demgegenüber ist es eine Aufgabe der vorliegenden Erfindung, die Nachteile des Standes der Technik zumindest teilweise zu vermeiden. Es ist eine weitere Aufgabe der vorliegenden Erfindung, ein System und ein Verfahren zur photoakustischen oder photothermischen Spektroskopie bereitzustellen, die auch für breitbandig absorbierende Proben eine hinreichende Selektivität (Unterscheidbarkeit des Ursprungs der Signaländerung) und Sensitivität bereitstellen.

Zumindest eine der zuvor genannten Aufgaben wird durch ein System gemäß dem unabhängigen Anspruch 1 gelöst. Dazu weist das System der eingangs genannten Art zusätzlich zu dem Probenhalter eine Filtergaszelle auf. Die Filtergaszelle ist in einem Strahlengang der Anregungsstrahlung zwischen der Anregungsstrahlungsquelle und dem Probenhalter angeordnet. In der Filtergaszelle ist ein Filtergas mit einem spektralen Absorptionsbereich aufgenommen, wobei sich der spektrale Absorptionsbereich und der spektrale Abstimmbereich der Anregungsstrahlungsquelle derart überlappen, dass das Modulieren der Anregungswellenlänge zu einer Intensitätsmodulation der Anregungsstrahlung in einer Strahlrichtung hinter der Filtergaszelle führt.

Es ist die der Erfindung zugrunde liegende Idee, die Vorteile, die technisch mit der Erzeugung der Anregungsstrahlung mit einer Modulation der Anregungswellenlänge verbunden sind, auch für Proben mit spektral breiten bzw. flachen Absorptionsbanden einsetzbar zu machen, für welche eine herkömmliche Wellenlängenmodulation zu keinen guten Messergebnissen führt. Die Wellenlängenmodulation der Anregungsstrahlungsquelle, insbesondere eines Lasers oder Halbleiterlasers, wird durch die erfindungsgemäße Filterung mit dem Filtergas verwertbar.

Dabei dient erfindungsgemäß das Filtergas in der Filtergaszelle einer Umsetzung der Wellenlängenmodulation der Anregungsstrahlung in eine Intensitätsmodulation. Das Modulieren der Anregungswellenlänge führt zu einer Änderung der Absorption der Anregungsstrahlung in der Filtergaszelle und damit zu einer Intensitätsmodulation der Anregungsstrahlung in Strahlrichtung hinter der Filtergaszelle. Somit ist die Anregungsstrahlung beim Eintreten in eine aufgenommene Probe auch intensitätsmoduliert.

Grundsätzlich geeignet als Anregungsstrahlungsquelle sind alle Strahlungsquellen, die es ermöglichen, der Anregungsstrahlung eine Modulation der Anregungswellenlänge innerhalb eines spektralen Abstimmbereichs aufzuprägen. In einer Ausführungsform der Erfindung ist die Anregungsstrahlungsquelle ein abstimmbarer Laser, insbesondere ein Halbleiterlaser oder ein Festkörperlaser.

Der spektrale Abstimmbereich der Anregungsstrahlungsquelle ist derjenige Wellenlängenbereich, über den hinweg die Anregungswellenlänge abstimmbar ist.

Dabei hat die Anregungsstrahlung selbst eine Linienbreite, d.h. typischerweise ist die Anregungswellenlänge nicht genau eine Wellenlänge, sondern ein Bereich von Wellenlängen um die Anregungswellenlängen herum. Dieser Bereich von Wellenlängen wird dann während der periodischen Modulation der Anregungswellenlänge innerhalb des spektralen Abstimmbereichs periodisch verschoben. Dabei ist die Linienbreite der Anregungsstrahlung um die Anregungswellenlänge herum kleiner als der spektrale Abstimmbereich.

In einer Ausführungsform erfolgt die Wellenlängenmodulation der Anregungsstrahlung sinus- oder kosinusförmig zwischen einer oberen Wellenlängengrenze und einer unteren Wellenlängengrenze des spektralen Abstimmbereichs. In einer solchen Ausführungsform wird beispielsweise ein Halbleiterlaser als Anregungsstrahlungsquelle mit einem sinusförmig modulierten Strom getrieben.

Die Wellenlängenmodulation der Anregungsstrahlung erfolgt in einer alternativen Ausführungsform im Wesentlichen linear zwischen einer oberen Wellenlängengrenze und einer unteren Wellenlängengrenze des spektralen Abstimmbereichs. In einer solchen Ausführungsform wird beispielsweise ein Halbleiterlaser als Anregungsstrahlungsquelle mit einem periodischen Sägezahnsignal getrieben.

Der unabhängige Anspruch 1 beansprucht das System ohne die eigentliche Probe und nur mit dem Probenhalter zum Aufnehmen der Probe. Es versteht sich, dass in einer Ausführungsform der Erfindung das System auch die Probe selbst umfasst.

Der Probenhalter ist der Probe angepasst zu wählen. In einer Ausführungsform ist der Probenhalter eine Gasmesszelle für eine gasförmige Probe oder eine Messzelle für eine flüssige Probe, beispielsweise eine Küvette. In einer Ausführungsform der Erfindung ist die Messzelle eine Hohlfaser, deren Faserkern mit der flüssigen oder gasförmigen Probe befüllbar ist. Ist die Probe ein Festkörper, beispielsweise ein Kristall, so kann der Probenhalter von einer Stützfläche gebildet sein, auf die die Probe aufgeklemmt oder aufgeklebt wird.

In einer Ausführungsform der Erfindung umfasst die Probe ein Zielgas.

Das erfindungsgemäße System ist insbesondere für breitbandig absorbierende Zielgase geeignet. Breite spektrale Absorptionsbereiche zeigen beispielsweise Zielgase mit großen Molekülen sowie Zielgase unter hohem Druck.

Die Ausgestaltung der Detektionseinrichtung hängt entscheidend davon ab, ob das erfindungsgemäße System für eine photoakustische Detektionsmethode oder eine photothermische Detektionsmethode eingesetzt wird. Die sich für jede der Methoden ergebenden Varianten werden nachstehend im Detail erläutert.

Die Auswerteeinrichtung ist in einer Ausführungsform ein Prozessor mit einer darauf ablaufenden, die entsprechenden Auswerteschritte implementierenden Software.

Die Filtergaszelle ist eine, vorzugsweise abgeschlossene, Gaszelle, die es ermöglicht, Anregungsstrahlung durch ein oder mehrere in der Filtergaszelle aufgenommene Filtergase hindurchzuleiten. In einer Ausführungsform der Erfindung ist die Filtergaszelle eine Transmissionszelle mit zwei einander gegenüberliegenden Fenstern für den Eintritt und den Austritt der Anregungsstrahlung.

In einer Ausführungsform ist die Filtergaszelle eine Hohlfaser, deren Faserkern mit dem Filtergas befüllt ist. Eine solche Ausführungsform ermöglicht eine platzsparende Verlängerung der Interaktionslänge zwischen der Anregungsstrahlung und dem Filtergas.

Der spektrale Absorptionsbereich des Filtergases ist ein Bereich von Wellenlängen, in dem das Filtergas elektromagnetische Strahlung, insbesondere die Anregungsstrahlung, absorbiert.

Entscheidend für die Umsetzung der Wellenlängenmodulation in eine Intensitätsmodulation der Anregungsstrahlung ist die Art und Weise, wie sich der spektrale Absorptionsbereich des Filtergases und der spektrale Abstimmbereich der Anregungsstrahlung überlappen.

Grundsätzlich führt jede Wellenlängenmodulation zu einer Intensitätsmodulation, wenn sich über den spektralen Abstimmbereich der Anregungsstrahlungsquelle hinweg die Absorption des Filtergases innerhalb des spektralen Absorptionsbereichs ändert. Allerdings ist es vorteilhaft, wenn diese Änderung der Absorption bei einer möglichst kleinen Wellenlängenänderung möglichst groß ist. Mit anderen Worten ausgedrückt, ist die ideale Absorptionsänderung des Filtergases eine steile Flanke der Absorptionscharakteristika.

In einer Ausführungsform der Erfindung ist der spektrale Absorptionsbereich des Filtergases innerhalb des Abstimmbereichs derart ausgebildet, dass eine Änderung der Anregungswellenlänge (ausgedrückt in Wellenzahlen) um 0,1 cm⁻¹ oder weniger zu einer Änderung der Absorption des Filtergases um 10 % oder mehr führt.

In einer Ausführungsform ändert sich über einen Wellenlängenbereich, der gleich groß ist wie oder kleiner ist als der spektrale Abstimmbereich, die Absorption des Filtergases von einer maximalen Absorption zu keiner Absorption.

In einer Ausführungsform der Erfindung liegt der spektrale Absorptionsbereich des Filtergases vollständig innerhalb des spektralen Abstimmbereichs der Anregungsstrahlungsquelle und spektral schmäler als der spektrale Abstimmbereich. Auf diese Weise wird, wenn die Anregungswellenlänge den spektralen Abstimmbereich einmal vollständig überstreicht, die Anregungsstrahlung einmal aus- und wieder eingeschaltet".

In einer Ausführungsform der Erfindung weist das Filtergas innerhalb des spektralen Abstimmbereichs abschnittsweise (d.h. nur abschnittsweise) eine Absorption von Null auf.

In einer Ausführungsform ist der spektrale Absorptionsbereich, in welchem das Filtergas eine von Null verschiedene Absorption für die Anregungsstrahlung aufweist, spektral breiter als die Linienbreite der Anregungsstrahlung.

In einer Ausführungsform der Erfindung ist der spektrale Abstimmbereich größer als der spektrale Absorptionsbereich des Filtergases, in welchem das Filtergas eine von Null verschiedene Absorption für die Anregungsstrahlung aufweist.

In einer Ausführungsform der Erfindung ist der spektrale Absorptionsbereich kleiner als die spektrale Breite der Zielgasabsorption.

In einer Ausführungsform der vorliegenden Erfindung enthält das Filtergas Methan, Ethan oder CO₂.

In einer Ausführungsform der Erfindung ist das System ein System für die photoakustische Spektroskopie.

Photoakustische Messverfahren basieren auf der Anregung der Probe, üblicherweise eines Gases, mit einer elektromagnetischen Anregungsstrahlung. Aufgrund der Absorption der elektromagnetischen Anregungsstrahlung in der Probe kommt es zu einer lokalen Erwärmung und Ausdehnung der Probe, die wiederum mit einer Druckerhöhung einhergeht. Wird die elektromagnetische Anregungsstrahlung periodisch in ihrer Intensität moduliert, so kommt es zu einer periodischen Anregung der Probe und damit periodisch abwechselnd zu einer Erwärmung und Abkühlung der Probe. Die periodische Erwärmung und Abkühlung wiederum führt zu einer periodischen Ausdehnung und Kontraktion und es entsteht innerhalb der Probe eine Schallwelle. Diese Schallwelle kann mit einer herkömmlichen Schallmesseinrichtung erfasst werden.

Die Amplitude der sich in der Probe ausbreitenden Schallwelle ist dabei proportional zu der Strahlungsabsorption der Anregungsstrahlung in der Probe. Die Strahlungsabsorption wiederum ist proportional zur Konzentration der absorbierenden Probe. Anhand der Amplitude der erfassten Schallwelle kann daher auf die Konzentration der Probe geschlossen werden.

Solche photoakustischen Messverfahren kommen in der Spurengasanalyse, beispielsweise zum Nachweis von Luftschadstoffen, zum Einsatz. Dabei können beispielsweise Konzentrationen von Methan in Stickstoff von nur zehn Teilen in einer Milliarde nachgewiesen werden.

Daher ist in einer Ausführungsform der Erfindung die Detektionseinrichtung eine Schallmesseinrichtung, wobei die Schallmesseinrichtung derart eingerichtet und an dem Probenhalter, insbesondere an einer Gasmesszelle, angeordnet ist, dass in dem Betrieb des Systems eine durch die in der Probe erzeugte periodische Erwärmung und Abkühlung generierte Schallwelle mit der Schallmesseinrichtung erfassbar ist. In einer Ausführungsform der Erfindung ist die Schallmesseinrichtung ein Mikrofon.

In einer alternativen Ausführungsform ist das System ein System zur photothermischen Spektroskopie. In einer solchen Ausführungsform umfasst die Detektionseinrichtung eine Abfragestrahlungsquelle und einen Strahlungsdetektor. Dabei ist die Abfragestrahlungsquelle derart ausgestaltet, dass die Abfragestrahlungsquelle in dem Betrieb des Systems eine elektromagnetische Abfragestrahlung mit eine Abfragewellenlänge erzeugt und abstrahlt, wobei die Abfragewellenlänge von der Anregungswellenlänge verschieden ist, und wobei ein Anregungsstrahlengang der Anregungsstrahlung und ein Abfragestrahlengang der Abfragestrahlung derart ausgestaltet und angeordnet sind, dass in dem Betrieb des Systems die Probe mit der Anregungsstrahlung und mit der Abfragestrahlung derart beleuchtet wird, dass sich der Anregungsstrahlengang und der Abfragestrahlengang in der Probe überlappen. Zudem ist der Strahlungsdetektor derart ausgestaltet und angeordnet, dass der Strahlungsdetektor in dem Betrieb des Systems die Abfragestrahlung in dem Abfragestrahlengang hinter der Probe erfasst und ein die in der Probe erzeugte periodische Erwärmung und Abkühlung repräsentierendes Detektionssignal erzeugt. In einer Ausführungsform schneiden sich Anregungsstrahlengang und der Abfragestrahlengang unter einem von 0° verschiedenen Winkel in der Probe.

Ein Beispiel für eine photothermische Methode zum Bestimmen eines Maßes für die Absorption der Probe ist die sogenannte photothermische Common-Path-Interferometrie (PCI). Diese weist eine hohe Nachweisempfindlichkeit für die Probe, insbesondere für ein Zielgas, auf und ermöglicht es, die Konzentration hochgenau zu bestimmen. Die PCI wird auch als "Thermal Lens Spectroscopy" bezeichnet. Diese Form der Absorptionssensorik zeichnet sich durch einen sich über viele Größenordnungen erstreckenden linearen Bereich sowie durch niedrige erzielbare Nachweisgrenzen für die Absorption und somit die noch erfassbaren Stoffkonzentrationen aus.

Die Grundidee der PCI beruht auf einem periodisch modulierten Erzeugen einer thermischen Linse in der Probe selbst. Dazu wird die Anregungsstrahlung mit einer sich über einen Anregungsstrahlquerschnitt der Anregungsstrahlung variierenden Anregungsintensität in die Probe eingestrahlt und durch die Absorption der Anregungsstrahlung in der Probe wird die Probe im Anregungsstrahlquerschnitt erwärmt. Aufgrund der über den Anregungsstrahlquerschnitt hinweg variierenden Anregungsintensität variiert auch der Leistungseintrag in die Probe und damit die Erwärmung der Probe über den Anregungsstrahlquerschnitt hinweg. Dadurch wird eine thermische Linse ausgebildet. Die Änderung der thermischen Linse, dann wenn sich die Absorption der Anregungsstrahlung in der Probe ändert, führt dazu, dass mehr oder weniger Abfragestrahlung auf den Strahlungsdetektor trifft.

In einer Ausführungsform der Erfindung schneiden sich der Anregungsstrahlengang und der Abfragestrahlengang unter einem von 0° verschiedenen Winkel in der Probe.

Zumindest eine der zuvor genannten Aufgaben wird auch durch das erfindungsgemäße Verfahren gemäß dem darauf gerichteten unabhängigen Anspruch gelöst. Dazu weist das Verfahren der eingangs genannten Art zusätzlich den Schritt auf, Beleuchten eines Filtergases in einer Strahlrichtung der Anregungsstrahlung vor der Probe, wobei das Filtergas einen spektralen Absorptionsbereich aufweist und wobei sich der spektrale Absorptionsbereich und der spektrale Abstimmbereich derart überlappen, dass das Modulieren der Anregungswellenlänge zu einer Intensitätsmodulation der Anregungsstrahlung in der Strahlrichtung nach dem Filtergas führt.

In einer Ausführungsform der Erfindung wird ein nicht von der Probe erzeugtes Absorptionssignal als Referenzsignal zum Bestimmen der Wellenlänge verwendet.

Weitere Vorteile, Merkmale und Anwendungsmöglichkeiten der vorliegenden Erfindung werden anhand der folgenden Beschreibung von Ausführungsformen davon und der dazugehörigen Figuren deutlich. In den Figuren sind gleiche Elemente mit identischen Bezugszeichen bezeichnet.
- Figur 1: ist ein das grundlegende Prinzip der vorliegenden Erfindung veranschaulichendes Blockdiagramm.
- Figur 2: ist eine schematische Auftragung der Absorption des Zielgases und der Transmission der Filtergaszelle.
- Figur 3: ist eine schematische Seitenansicht einer ersten Ausführungsform des erfindungsgemäßen Systems zur photoakustischen Spektroskopie.
- Figur 4: ist eine schematische Seitenansicht einer zweiten Ausführungsform des erfindungsgemäßen Systems zur photothermischen Spektroskopie.

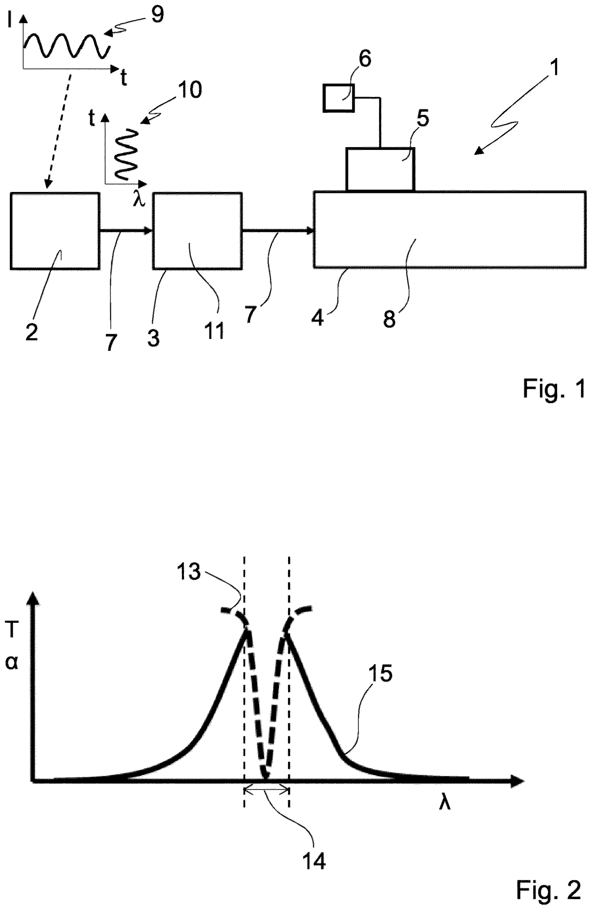

Die Figuren 1 und 2 erläutern in ihrer Zusammenschau das der vorliegenden Erfindung zugrunde liegende Prinzip. Das erfindungsgemäße System 1 umfasst die folgenden Elemente: Einen Laser 2 als Anregungsstrahlungsquelle, eine Filtergaszelle 3, eine Gasmesszelle 4 als Probenhalter zum Aufnehmen eines Zielgases 8 als Probe, eine Detektionseinrichtung 5 und eine Auswerteeinrichtung 6. Die Auswerteeinrichtung ist mit der Detektionseinrichtung 5 derart verbunden ist, dass sie in dem Betrieb des Systems 1 ein Detektionssignal von der Detektionseinrichtung erhält und auswertet.

Für die hier betrachteten Beispiele soll die Konzentration von Methan als Zielgas 8 in der Gasmesszelle 4 bestimmt werden. Dabei ist die Absorption, welche elektromagnetische Anregungsstrahlung 7 durch das Methan in der Gasmesszelle 4 erfährt von der Konzentration des Zielgases in der Gasmesszelle 4 abhängig. Das erfindungsgemäße System 1 erfasst ein Maß für die Absorption des Zielgases 8 in der Gasmesszelle 4.

Die Anregungsstrahlung 7 hat eine Anregungswellenlänge, die sich über einen spektralen Abstimmbereich von 0,1 cm⁻¹ abstimmen und innerhalb des spektralen Abstimmbereichs periodisch modulieren lässt. Zu diesem Zweck wird der Halbleiterlaser 2 mit einem sinusförmig periodisch modulierten Strom getrieben. Dieser Treiberstrom ist schematisch in der mit dem Bezugszeichen 9 gekennzeichneten Inset-Grafik aus Figur 1 dargestellt. In der Folge erfährt die von dem Laser 2 erzeugte und abgestrahlte Anregungsstrahlung 7 eine ebenfalls sinusförmig modulierte Wellenlängenänderung über die Zeit. Dies ist in der mit 10 bezeichneten Inset-Grafik aus Figur 1 dargestellt, wobei hier auf der x-Achse die Wellenlänge aufgetragen ist und auf der x-Achse die Zeit. Die Anregungswellenlänge erfährt eine sinusförmige Variation zwischen der unteren Wellenlängengrenze des spektralen Abstimmbereichs und der oberen Wellenlängengrenze des spektralen Abstimmbereichs des Lasers 2.

Die hier betrachteten photothermischen und photoakustischen Messmethoden beruhen auf einer periodischen Erwärmung und Abkühlung des Zielgases 8 aufgrund der modulierten Absorption der Anregungsstrahlung 7 in dem Zielgas 8. Da Kohlenwasserstoffe tendenziell eine spektral breite Absorptionscharakteristik aufweisen, würde die dem Laser 2 aufgeprägte lineare Änderung der Anregungswellenlänge 10 nur zu sehr geringen Änderungen der lokalen Temperatur des Zielgases 8 in der Gasmesszelle 4 führen. Weder die photoakustische Detektion noch die photothermische Detektion würden ein quantitativ zuverlässig auswertbares Signal generieren.

Um dennoch die Vorteile bei der Erzeugung der wellenlängenmodulierten Anregungsstrahlung 7 mittels des Halbleiterlasers 2 nutzen zu können, ist in der Strahlrichtung der Anregungsstrahlung 7 vor der Gasmesszelle 4 eine Filtergaszelle 3 mit einem Filtergas 11 angeordnet.

In den hier diskutierten Ausführungsformen ist das Filtergas 11 ebenfalls Methan. Das Filtergas 11 ist so gewählt, dass es einen spektralen Absorptionsbereich aufweist, der vollständig innerhalb des spektralen Abstimmbereichs des Lasers 2 liegt. Das Filtergas 11 steht dabei unter erheblich geringerem Druck als das Zielgas 8. Auf diese Weise ist der spektrale Absorptionsbereich des Filtergases 11 schmalbandiger als der des Zielgases 11. Innerhalb des spektralen Abstimmbereichs 14 des Lasers 2 steigt die Absorption 15 des Filtergases 11 von Null auf ein lokales Maximum und fällt dann wieder auf Null ab. In dem konkret gewählten Beispiel überstreicht daher beim periodisch modulierten Abstimmen der Anregungswellenlänge über den spektralen Abstimmbereich 14 hinweg die Anregungswellenlänge einen Absorptionspeak des Filtergases 11. Aufgrund der periodischen Modulation wird in dem gezeigten Beispiel das Absorptionsmaximum während einer Periode der Wellenlängenmodulation zweimal überstrichen; die Anregungsstrahlung wird zweimal "ausgeschaltet".

In alternativen Ausführungsbeispielen sind das Zielgas 8 und das Filtergas 11 voneinander verschiedene Gase. Beispielsweise könnte das Zielgas 8 ein großes Kohlenwasserstoffmolekül (C>=2) sein und das Filtergas Methan bei Normaldruck oder verringertem Druck.

Idealerweise ergibt sich die Situation, so wie sie schematisch in der Auftragung aus Figur 2 gezeigt ist. Aufgetragen ist in Figur 2 die Absorption 15 des Zielgases 8 als durchgezogene Linie. Zudem ist die Transmission der Filtergaszelle 3 als gestrichelte Linie 13 dargestellt. In der gezeigten Ausführungsform dient die Filtergaszelle 3 mit dem Filtergas 11 als Kerbfilter für die Anregungsstrahlung 7. Wird Anregungswellenlänge über den spektralen Abstimmbereich 14 hinweg variiert, so bricht die Intensität der Anregungsstrahlung 7 in Strahlrichtung hinter der Filtergaszelle 3 einmal ein, um danach wieder anzusteigen. Anders betrachtet kann man sagen, dass die Anregungsstrahlung beim Überstreichen des spektralen Abstimmbereichs 14 einmal aus- und wieder eingeschaltet wird.

Da gleichzeitig die Absorption 15 des Zielgases 8 über den spektralen Abstimmbereich 14 nur wenig variiert, macht sich diese Modulation der Anregungsstrahlung 7 in dem Zielgas 8 in einem Wechsel aus Erwärmung, Abkühlung und Erwärmung bemerkbar. Dieser periodische Wechsel von Erwärmung und Abkühlung wiederum wird erfindungsgemäß mit der Detektionseinrichtung 5 erfasst.

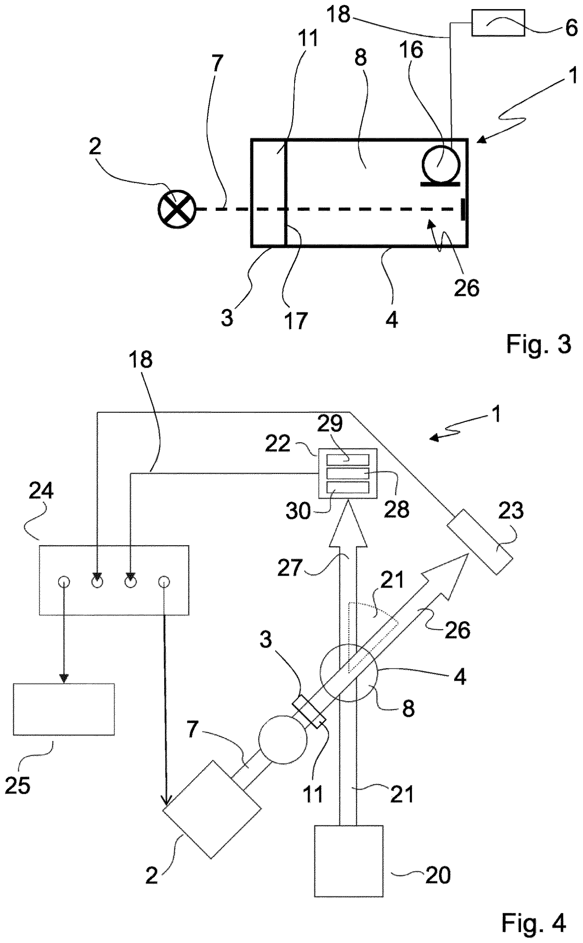

Die lokale Erwärmung des Zielgases im Bereich des Strahls der Anregungsstrahlung 7 in der Gasmesszelle 4 führt zu einer Druckänderung, die als Schallwelle messbar ist, oder aber zu einer Dichteänderung, die als Brechungsindexänderung messbar ist. An diesem Punkt setzen die beiden schematisch in den Figur 3 und 4 gezeigten Ausführungsformen des Systems 1 für die Detektion an.

Figur 3 zeigt ein photoakustisches System 1. Zum Erfassen der durch die periodische Erwärmung und Abkühlung in dem Zielgas 8 erzeugten Schallwelle ist in der Gasmesszelle 4 ein Mikrofon 16 als Schallmesseinrichtung angeordnet. Dieses Mikrofon 16 ist mit der Auswerteeinrichtung 6 verbunden.

Die Filtergaszelle 3 ist in dieser Ausführungsform unmittelbar an die Gasmesszelle 4 für das Zielgas 8 anschließend angeordnet, wobei die Filtergaszelle 3 und die Gasmesszelle 4 durch eine transparente Trennwand 17 voneinander abgetrennt sind. Entscheidend ist für das erfindungsgemäße System 1, dass die Auswerteeinrichtung 6 das Detektionssignal 18 des Mikrofons 16 als Maß für die Konzentration des Zielgases 8 in der Messgaszelle 4 verwendet, während das Filtergas 11 nur der Umsetzung der Wellenlängenmodulation der Anregungsstrahlung 7 in eine Intensitätsmodulation dient, so wie dies zuvor beschrieben wurde.

Demgegenüber dient das System 1 aus Figur 4 einer photothermischen Erfassung der Absorption der Anregungsstrahlung 7.

Das System 1 ist in Figur 1 in einer schematischen Ansicht von oben dargestellt. Das System 1 umfasst einen Laser 2 als Strahlungsquelle für die Anregungsstrahlung 7, einen Laser 20 als Strahlungsquelle für die Abfragestrahlung 21, einen Detektor 22 zum Erfassen eines Interferenzmusters, einen Detektor 23 zum Erfassen der Gesamtleistung der Anregungsstrahlung 7, eine Verarbeitungseinrichtung in Form eines Lock-in-Verstärker 24 sowie eines Rechners 25.

In dem hier beschriebenen Beispiel wird das Zielgas 8 als Probe analysiert, wobei es die Aufgabe des photothermischen Absorptionssensors 1 ist, den Gehalt an Methan als Zielgas 8 in einem Gasgemisch in der Messgaszelle 4 zu bestimmen.

Auch in der Ausführungsform der Figur 4 setzt die Filtergaszelle 3 mit dem Filtergas 11 die dem Laser 2 von dem Lock-in-Verstärker 24 vorgegebene Wellenlängenmodulation der Anregungsstrahlung 7, wie zuvor für das System 1 aus Figur 3 erläutert, in eine Intensitätsmodulation der Anregungsstrahlung 7 um.

Die Anregungsstrahlung 7 erzeugt in dem Zielgas 8 eine über den Anregungsstrahlquerschnitt variierende thermische Erwärmung, die im Wesentlichen der Intensitätsverteilung der Anregungsstrahlung 7 innerhalb des Anregungsstrahlquerschnitts folgt. Die Laser 2, 20 generieren sowohl die Anregungsstrahlung 7 als auch die Abfragestrahlung 21 mit gaußförmigen Intensitätsverteilungen über ihren jeweiligen Strahlquerschnitt.

Das Zielgas 8 absorbiert bei der Anregungswellenlänge der Anregungsstrahlung 7 von 3057,7 cm⁻¹. Daher generiert die Anregungsstrahlung in der Mitte des Anregungsstrahlquerschnitts eine stärkere Erwärmung des Probengases als symmetrisch um die Mitte herum.

Die beschriebene lokale Verteilung der Erwärmung des Zielgases 8 über den Anregungsstrahlquerschnitt hinweg führt zu einer Brechungsindexvariation über den Anregungsstrahlquerschnitt hinweg, die im Wesentlichen dem Erwärmungsprofil über den Anregungsstrahlquerschnitt 2 folgt.

Um später in dem Lock-in-Verstärker 24 bzw. in dem Rechner 25 eine Normierung auf die Gesamtleistung der Anregungsstrahlung 7 vornehmen zu können, wird die Leistung der Anregungsstrahlung 7 hinter Gasmesszelle 4 mit dem Detektor 23 erfasst.

Die Abfragestrahlung 21 hat eine Abfragewellenlänge, die von der Anregungswellenlänge verschieden ist und von der Absorptionswellenlänge des Zielgases 8 verschieden ist. Die Abfragestrahlung 21 passiert daher das Zielgas 8 im Wesentlichen ohne eine nennenswerte Absorption zu erfahren. Der über den Strahlquerschnitt der Anregungsstrahlung 7 variierende Brechungsindex innerhalb des Zielgases 8 führt jedoch zu einer Selbstinterferenz der Abfragestrahlung 21, so wie sie beispielsweise auch beim Fresnelschen Biprismaversuch zu beobachten ist.

Die Abfragestrahlung 21 schneidet die Anregungsstrahlung 7 so, dass der Anregungsstrahlengang 26 der Anregungsstrahlung 7 und der Abfragestrahlengang 25 der Abfragestrahlung 21 sich unter einem Winkel 31 von etwa zehn Grad schneiden. Dabei schneiden sich bei idealer Justierung des Systems 1 die Mittenachsen des Anregungsstrahlengangs 26 und des Abfragestrahlengangs 27.

Im Nahfeld hinter dem Kreuzungspunkt der Anregungsstrahlung 7 und der Abfragestrahlung 21 in der Gasmesszelle 4 bildet sich so ein Interferenzmuster aus, welches charakteristisch für den Strahlquerschnitt der Anregungsstrahlung 7, für die Modulation der Anregungsstrahlung 7 sowie für die Absorption der Anregungsstrahlung 7 durch das in der Gasmesszelle 4 enthaltene Methan ist.

Enthält die Gasmesszelle 4 das zu analysierende Methan nicht, so wird die Anregungsstrahlung 7 in dem Zielgas 8 nicht absorbiert und es entsteht kein Interferenzmuster, die Abfragestrahlung 21 hat auch hinter dem Kreuzungspunkt in dem Zielgas 8 eine im Wesentlichen ungestörte gaußförmige Intensitätsverteilung. Sobald das Probengas das Methanenthält, kommt es zur Ausbildung eines für die Konzentration des Methancharakteristischen Interferenzmusters. Dieses wird mithilfe eines Detektors 22 in der Detektorebene kurz hinter dem Kreuzungspunkt in dem Zielgas 8 erfasst.

Zum Erfassen des Interferenzmusters ist ein Detektor 22 vorgesehen, welcher in der Detektorebene einen ersten Sensorabschnitt 28 an einem ersten Ort, einen zweiten Sensorabschnitt 29 an einem zweiten Ort und einen dritten Sensorabschnitt 30 an einem dritten Ort aufweist. Dabei ist die Detektorebene, anders als in Figur 1 schematisch zu erkennen, senkrecht zur Strahlrichtung der Abfragestrahlung 21 angeordnet. Der Detektor 22 erstreckt sich also nicht wie gezeigt in der Ebene der Darstellung (Blattebene), sondern senkrecht dazu.

Die Absorption und damit die thermische Erwärmung des Zielgases 8 ist mit der von dem Lock-in-Verstärker 24 vorgegebenen Modulationsfrequenz moduliert. Diese Modulation findet sich auch in dem Interferenzmuster wieder. Die Änderung des Interferenzmusters ist dann das Maß für die Absorption durch das Zielgas 8 in der Gasmesszelle 4.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Laser für die Anregungsstrahlung
- 3: Filtergaszelle
- 4: Gasmesszelle
- 5: Detektionseinrichtung
- 6: Auswerteeinrichtung
- 7: Anregungsstrahlung
- 8: Zielgas
- 9: Grafik-Inset (modulierter Treiberstrom)
- 10: Anregungswellenlänge
- 11: Filtergas
- 13: Transmission der Gasmesszelle
- 14: spektraler Abstimmbereich
- 15: Absorption des Zielgases
- 16: Mikrofon
- 17: transparente Trennwand
- 18: Detektionssignal
- 20: Laser für die Abfragestrahlung
- 21: Abfragestrahlung
- 22: Strahlungsdetektor für das Interferenzmuster
- 23: Detektor für die Anregungsstrahlung
- 24: Lock-in-Verstärker
- 25: Rechner
- 26: Anregungsstrahlengang
- 27: Abfragestrahlengang
- 28: erster Sensorabschnitt
- 29: zweiter Sensorabschnitt
- 30: dritter Sensorabschnitt
- 31: Winkel

## Patentansprüche

1. System (1) zum Bestimmen eines Maßes für eine Absorption einer Probe (8), wobei das System (1)
eine Anregungsstrahlungsquelle (2), wobei die Anregungsstrahlungsquelle (2) derart ausgestaltet ist, dass
sie in einem Betrieb des Systems (1) elektromagnetische Anregungsstrahlung (7) mit einer Anregungswellenlänge erzeugt und abstrahlt, und
sie in dem Betrieb des Systems (1) die Anregungswellenlänge innerhalb
eines spektralen Abstimmbereichs (14) periodisch moduliert,
einen Probenhalter (4),
wobei der Probenhalter (4) derart ausgestaltet und angeordnet ist,
dass an dem Probenhalter (4) eine Probe (8) aufnehmbar ist und
dass in dem Betrieb des Systems (1) die Anregungsstrahlung (7)
die an dem Probenhalter (4) aufgenommene Probe (8) beleuchtet,
eine Detektionseinrichtung (5),
wobei die Detektionseinrichtung (5) derart ausgestaltet und angeordnet ist,
dass sie in dem Betrieb des Systems (1) eine durch die Absorption der Anregungsstrahlung (7) in der Probe (8) erzeugte periodische Erwärmung und Abkühlung detektiert und ein die periodische Erwärmung und Abkühlung repräsentierendes Detektionssignal (18) erzeugt und ausgibt, und
eine Auswerteeinrichtung (6) aufweist,
wobei die Auswerteeinrichtung (6) derart wirksam mit der Detektionseinrichtung (5) verbunden ist, dass die Auswerteeinrichtung (6) in dem Betrieb des Systems (1) das Detektionssignal (18) von der Detektionseinrichtung (5) erhält, und
wobei die Auswerteeinrichtung (6) derart eingerichtet ist, dass sie in dem Betrieb des Systems (1) aus dem Detektionssignal (18) das Maß für die Absorption der Probe (8) bestimmt,
**dadurch gekennzeichnet, dass** das System (1)
zusätzlich zu dem Probenhalter (4) eine Filtergaszelle (3) aufweist,
wobei die Filtergaszelle (3) in einem Anregungsstrahlengang (26) der Anregungsstrahlung (7) zwischen der Anregungsstrahlungsquelle (2) und dem Probenhalter (4) angeordnet ist,
wobei in der Filtergaszelle (3) ein Filtergas (11) mit einem spektralen Absorptionsbereich aufgenommen ist und
wobei sich der spektrale Absorptionsbereich und der spektralen Abstimmbereich derart überlappen, dass das Modulieren der Anregungswellenlänge zu einer Intensitätsmodulation der Anregungsstrahlung (7) in einer Strahlrichtung hinter der Filtergaszelle (3) führt.

2. System (1) nach dem vorhergehenden Anspruch, wobei der spektrale Absorptionsbereich vollständig innerhalb des spektralen Abstimmbereichs liegt.

3. System (1) nach einem der vorhergehenden Ansprüche, wobei das Filtergas (11) innerhalb des spektralen Abstimmbereichs abschnittsweise eine Modulation von Null aufweist.

4. System (1) nach einem der vorhergehenden Ansprüche, wobei der spektrale Absorptionsbereich des Filtergases (11) innerhalb des Abstimmbereichs derart ausgebildet ist, dass eine Änderung der Anregungswellenlänge um 0,1 cm⁻¹ oder weniger zu einer Änderung der Absorption des Filtergases um 10 Prozent oder mehr führt.

5. System (1) nach einem der vorhergehenden Ansprüche, wobei das Filtergas Methan, Ethan oder CO₂ enthält.

6. System (1) nach einem der vorhergehenden Ansprüche, wobei der Probenhalter (4) eine Gasmesszelle ist.

7. System (1) nach einem der vorhergehenden Ansprüche, wobei die Detektionseinrichtung (5) eine Schallmesseinrichtung (16) umfasst,
wobei die Schallmesseinrichtung (16) derart eingerichtet und an dem Probenhalter (4) angeordnet ist, dass in dem Betrieb des Systems (1) eine durch die in der Probe (8) erzeugte periodische Erwärmung und Abkühlung generierte Schallwelle mit der Schallmesseinrichtung (16) erfassbar ist.

8. System (1) nach einem der Ansprüche 1 bis 6, wobei die Detektionseinrichtung (5)
eine Abfragestrahlungsquelle (20),
wobei die Abfragestrahlungsquelle (20) derart ausgestaltet ist, dass die Abfragestrahlungsquelle (20) in dem Betrieb des Systems (1) eine elektromagnetische Abfragestrahlung (21) mit einer Abfragewellenlänge erzeugt und abstrahlt, wobei die Abfragewellenlänge von der Anregungswellenlänge verschieden ist, und
wobei ein Anregungsstrahlengang (26) der Anregungsstrahlung (7) und ein Abfragestrahlengang (27) der Abfragestrahlung (21) derart ausgestaltet und angeordnet sind, dass in dem Betrieb des Systems (1) die Probe (8) mit der Anregungsstrahlung (7) und mit der Abfragestrahlung (21) derart beleuchtet wird, dass sich der Anregungsstrahlengang (26) und der Abfragestrahlengang (27) Probe (8) in einem Volumen der Probe (8) überlappen, und
einen Strahlungsdetektor (22) umfasst,
wobei der Strahlungsdetektor (22), der derart ausgestaltet und angeordnet ist, dass der Strahlungsdetektor (22) in dem Betrieb des Systems (1) die Abfragestrahlung (21) in dem Abfragestrahlengang (27) hinter der Probe (3) erfasst und ein die periodische Erwärmung und Abkühlung repräsentierendes Detektionssignal (18) erzeugt.

9. Verfahren zum Bestimmen eines Maßes für eine Absorption einer Probe (8), wobei das Verfahren die Schritte umfasst:
Erzeugen und Abstrahlen elektromagnetischer Anregungsstrahlung (7) mit einer Anregungswellenlänge,
periodisches Modulieren der Anregungswellenlänge innerhalb eines spektralen Abstimmbereichs,
Beleuchten der Probe (8) mit der Anregungsstrahlung (7),
Detektieren einer durch die Absorption der Anregungsstrahlung (7) in der Probe (8) erzeugten periodischen Erwärmung und Abkühlung und
Bestimmen des Maßes für die Absorption aus der periodischen Erwärmung und Abkühlung,
**dadurch gekennzeichnet, dass** Verfahren weiterhin die Schritte aufweist
Beleuchten eines Filtergases in einer Strahlrichtung der Anregungsstrahlung (7) vor der Probe (8),
wobei das Filtergas (11) einen spektralen Absorptionsbereich aufweist und
wobei sich der spektrale Absorptionsbereich und der spektrale Abstimmbereich derart überlappen, dass das Modulieren der Anregungswellenlänge zu einer Intensitätsmodulation der Anregungsstrahlung (7) in der Strahlrichtung nach dem Filtergas (11) führt.

10. Verfahren nach dem vorhergehenden Anspruch, wobei ein nicht von der Probe erzeugtes Absorptionssignal als Referenzsignal zum Bestimmen der Wellenlänge verwendet wird.

11. Verfahren nach Anspruch 9 oder 10, wobei die Probe (8) ein Zielgas ist.
